# FASCICULE DE BREVET EUROPEEN

(11) **EP 2 872 455 B1**
(45) Date de publication et mention de la délivrance du brevet: **25.05.2022**
(21) Numéro de dépôt: 13747449.0
(22) Date de dépôt: 15.07.2013
(51) Int. Cl.: C03B 37/04

(54) **DISPOSITIF DE FORMATION DE FIBRES MINERALES**
VORRICHTUNG ZUR HERSTELLUNG VON MINERALFASERN
APPARATUS FOR FORMING MINERAL FIBRES

(30) Priorité: 16.07.2012 FR 1256851
(43) Date de publication de la demande: 20.05.2015
(60) Demande divisionnaire: 22167692.7
(73) Titulaire: SAINT-GOBAIN ISOVER, 92400 Courbevoie (FR)
(72) Inventeur: CHAKROUN, Mohamed, F-75019 Paris (FR)
(74) Mandataire: Saint-Gobain Recherche
(86) Numéro de dépôt international: PCT/FR2013/051687
(87) Numéro de publication internationale: WO 2014/013172

(56) Documents cités:
- EP-A1- 0 519 797
- FR-A- 1 382 917
- FR-A1- 2 443 436
- GB-A- 849 981
- US-A- 3 040 377
- US-A- 3 233 989
- US-A- 3 250 602
- US-A- 3 304 164
- US-A- 3 644 108
- US-A- 4 359 444
- US-A- 4 661 135
- US-A- 4 661 135
- US-A- 5 277 706
- US-A- 5 900 037
- US-A1- 2004 112 093

## Description

L'invention concerne un dispositif de formation de fibres minérales par un procédé de centrifugation interne. Elle s'applique notamment à la production industrielle de laine de verre destinée à entrer par exemple dans la composition de produits d'isolation thermique et/ou acoustique.

Il est connu différents procédés de centrifugation interne. Un filet de verre fondu est introduit dans une assiette de fibrage tournant à grande vitesse et percée à sa périphérie par un très grand nombre d'orifices par lesquels le verre est projeté sous forme de filaments sous l'effet de la force centrifuge. Ces filaments peuvent alors être soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par un tapis de réception et de convoyage perméable aux gaz.

Ce procédé a fait l'objet de nombreux perfectionnements, portant notamment pour certains sur l'assiette de fibrage, pour d'autres sur les moyens de générer le courant annulaire d'étirage, par exemple grâce à des brûleurs de type particulier. Voir notamment les documents EP-B-0 189 354, EP-B-0 519 797, WO-A-97/15532 concernant ce dernier point.

Le document FR-A-1 382 917 décrit un organe de fibrage dont le principe est toujours abondamment utilisé : la matière fondue est amenée dans un panier comportant sur sa paroi verticale des orifices à travers lesquels la matière est projetée sur la paroi d'une assiette de fibrage qui est solidaire du panier et qui comporte un grand nombre d'orifices. On nomme « bande » de l'assiette de fibrage cette paroi. Afin d'obtenir un fibrage de qualité, les orifices sont répartis sur des rangées annulaires et les diamètres des orifices sont variables suivant la rangée à laquelle ils appartiennent, ce diamètre allant en diminuant depuis le haut de la bande jusqu'à sa partie inférieure.

Des améliorations ont été apportées à ce principe de base, comme enseigné notamment dans le document FR-A-2 443 436, où des moyens permettent d'obtenir un écoulement laminaire de la matière fondue du haut vers le bas de la bande de l'assiette.

Une autre modification, décrite dans le document EP-A-1 370 496, a été apportée pour améliorer la qualité des fibres et augmenter le rendement. Il s'agit de répartir les orifices de la bande en une pluralité de zones annulaires disposées les unes au-dessus des autres, avec au moins deux zones annulaires ayant un nombre d'orifices par unité de surface qui est différent d'une valeur supérieure ou égale à 5 %.

Le document WO 03/069226 décrit un brûleur à combustion interne comprenant une chambre de combustion dans laquelle débouche au moins un conduit d'alimentation en combustible et en comburant et au moins un élément stabilisateur de flamme créant une zone de confinement dans laquelle au moins une partie de la combustion s'effectue.

US4359444 et GB849981 décrivent, quant à eux, l'utilisation d'inducteurs comme moyen de maintien en température d'une assiette de fibrage en complément à un brûleur qui constitue le mode de chauffage principal de l'assiette de fibrage.

Dans l'ensemble de ces exemples, la bande périphérique de l'assiette est chauffée à la fois par le verre fondu qui est centrifugé dans l'assiette de fibrage et par l'air chaud soufflé par un brûleur à combustion interne générant le courant annulaire d'étirage.

Toutefois, le chauffage par un brûleur à combustion interne est une source de consommation énergétique importante, avec un rendement énergétique inférieur à 30%, et une source d'émission de dioxyde de carbone très élevée.

Il y a donc un besoin pour un dispositif de formation de fibres minérales qui ait une consommation énergétique et un taux de dioxyde de carbone diminués.

Pour cela, l'invention propose un dispositif de formation de fibres minérales comprenant :
- un centrifugeur adapté à tourner autour d'un axe de rotation, le centrifugeur comprenant une paroi annulaire percée d'une pluralité d'orifices, la paroi annulaire ayant pour axe de symétrie l'axe de rotation,
- un premier inducteur annulaire adapté à chauffer la partie supérieure de la paroi annulaire,
- un deuxième inducteur annulaire adapté à chauffer la partie inférieure de la paroi annulaire,
le chauffage de la bande annulaire par sa partie supérieure et par sa partie inférieure permettant un gradient de température sur la hauteur du centrifugeur.

Selon une autre particularité, le dispositif de formation de fibres minérales comprend en outre une première couronne de soufflage adaptée à souffler de l'air sur les fibres minérales destinées à sortir de la pluralité d'orifices de la paroi annulaire de façon à les entraîner vers un tapis de réception et de convoyage des fibres.

Selon une autre particularité, le dispositif de formation de fibres minérales comprend en outre une deuxième couronne de soufflage adaptée à souffler de l'air sur une zone du centrifugeur située au-dessus de la paroi annulaire de façon à contrôler la température de la partie haute du centrifugeur.

Selon une autre particularité, la coopération des deux couronnes de soufflage crée une zone de turbulences à proximité de la paroi annulaire du centrifugeur, cette zone de turbulences permettant un étirage supplémentaire des fibres minérales destinées à sortir de la pluralité d'orifices de la paroi annulaire.

Selon une autre particularité, le dispositif comprend en outre au moins deux premières couronnes de soufflage concentriques de diamètres différents, la coopération des premières couronnes de soufflage créant une zone de turbulences à proximité de la paroi annulaire du centrifugeur, cette zone de turbulences permettant un étirage supplémentaire des fibres minérales destinées à sortir de la pluralité d'orifices de la paroi annulaire.

Selon une autre particularité, la première couronne annulaire comporte plusieurs sorties d'air concentriques créant une zone de turbulences à proximité de la paroi annulaire du centrifugeur, cette zone de turbulences permettant un étirage supplémentaire des fibres minérales destinées à sortir de la pluralité d'orifices de la paroi annulaire.

Selon une autre particularité, le deuxième inducteur annulaire, par exemple situé sous le centrifugeur, est connecté en série ou en parallèle avec le premier inducteur annulaire. Les premier et deuxième inducteurs sont alors de préférence alimentés indépendamment l'un de l'autre.

Selon une autre particularité, le dispositif de formation de fibres minérales comprend en outre un brûleur interne adapté à être utilisé au démarrage du dispositif de formation de fibres minérales.

Selon une autre particularité, le centrifugeur comprend un fond.

Selon une autre particularité, le centrifugeur ne comprend pas de fond et comprend un panier.

Selon une autre particularité, le dispositif de formation de fibres minérales comprend en outre une couronne d'encollage des fibres minérales située sous le centrifugeur.

L'invention concerne également un procédé de formation de fibres minérales par centrifugation interne, mettant en œuvre le dispositif décrit ci-dessus, dans lequel le matériau à fibrer est déversé dans le centrifugeur, et la bande annulaire est chauffée par sa partie supérieur et par sa partie inférieure avec un gradient de température sur la hauteur dudit centrifugeur.

D'autres caractéristiques et avantages de l'invention vont à présent être décrits en regard des dessins sur lesquels :

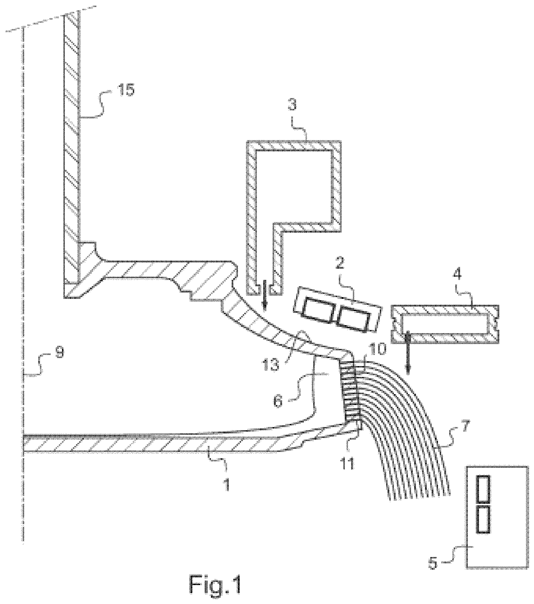

- La figure 1 représente une vue en coupe d'un dispositif de formation de fibres minérales selon l'invention.

On définit le « haut », le « bas », le « dessus » et le « dessous » par rapport à un axe vertical lorsque le centrifugeur est en position de centrifugation, c'est-à-dire lorsque l'axe de rotation du centrifugeur est selon un axe vertical, comme sur la figure 1.

L'invention se rapporte à un dispositif de formation de fibres minérales. Le dispositif comprend un centrifugeur adapté à tourner autour d'un axe de rotation. Le centrifugeur comprend une paroi annulaire, d'axe de symétrie l'axe de rotation, qui est percée d'une pluralité d'orifices. Le dispositif comprend également un premier et un deuxième inducteurs annulaires. Le premier inducteur annulaire est adapté à chauffer la partie supérieure de la paroi annulaire du centrifugeur. Le deuxième inducteur annulaire est adapté à chauffer la partie inférieure de la paroi annulaire du centrifugeur.

Ainsi, le chauffage du centrifugeur est réalisé par induction électrique, ce qui permet d'augmenter le rendement énergétique et de diminuer très fortement, voire d'annuler (si aucun brûleur interne n'est utilisé), le taux de dioxyde de carbone, puisqu'aucun brûleur annulaire à combustion interne produisant un flux de gaz chaud n'est utilisé.

La figure 1 représente une vue en coupe d'un dispositif de formation de fibres minérales selon l'invention.

Le dispositif de fibres minérales comprend un centrifugeur 1, également nommé assiette de fibrage, comportant une paroi annulaire 10 percée d'une pluralité d'orifices 11. Le centrifugeur 1 comprend également un voile 13. Le voile 13 forme le dessus du centrifugeur 1, entre la paroi annulaire et la tulipe. Le dispositif de formation de fibres minérales comprend également un arbre 15 d'axe 9 destiné à être entraîné en rotation par un moteur (non représenté). Le centrifugeur 1 est fixé à l'arbre 15 via la tulipe, qui est dans le prolongement du voile. Lorsque le dispositif de formation de fibres minérales est en position de fibrage, l'axe 9 est vertical. L'axe 9 est l'axe de symétrie du centrifugeur.

L'arbre 15 est creux. A son extrémité supérieure, l'arbre 15 est relié à des moyens d'alimentation en verre fondu. A son extrémité inférieure, l'arbre 15 est relié au centrifugeur lorsque ce dernier est muni d'un fond, comme cela est visible sur la figure 1. En variante, si le centrifugeur 1 est dépourvu de fond, l'arbre 15 est relié à un panier. Dans le cas d'un dispositif avec panier, le panier est situé à l'intérieur du centrifugeur 1, lui-même fixé à l'arbre 15. Le panier, également fixé sur l'arbre 15, est destiné à être entraîné en rotation avec le centrifugeur 1 et l'arbre 15. Le panier comprend une paroi annulaire percée d'une pluralité d'orifices.

Lorsque le dispositif de formation de fibres minérales est en fonctionnement, le centrifugeur 1 et l'arbre 15, ainsi que, le cas échéant, le panier, sont entraînés en rotation autour de l'axe 9 de l'arbre 15. Du verre fondu 6 s'écoule dans l'arbre 15, depuis les moyens d'alimentation en verre fondu, jusqu'au fond de l'assiette ou jusque dans le panier, dans lequel se répand le verre fondu 6. Dans le cas d'un centrifugeur avec fond, une réserve permanente de verre fondu 6 se forme contre la paroi annulaire 10 sous l'effet de la rotation. Dans le cas d'un centrifugeur sans fond avec panier, le verre fondu est projeté, sous l'effet de la rotation, sur la paroi annulaire du panier, passe par la pluralité d'orifices du panier et, sous forme de filaments volumineux, est projeté sur la paroi périphérique 10 du centrifugeur 1. Une réserve permanente de verre fondu 6 se forme alors dans le centrifugeur sans fond contre la paroi annulaire sous l'effet de la rotation. La réserve permanente de verre fondu 6 vient alimenter la pluralité d'orifices 11 percés dans la paroi annulaire 10 du centrifugeur 1 pour former des cônes d'écoulement se prolongeant en avant-fibres.

Les orifices 11 de la paroi annulaire 10 du centrifugeur 1 sont de préférence plus nombreux et de diamètre inférieur aux orifices d'une paroi annulaire d'un centrifugeur utilisé avec un brûleur à combustion interne car l'étirage est moins efficace avec un chauffage par induction qu'avec un chauffage par brûleur par combustion interne. Ainsi, la paroi annulaire 10 du centrifugeur 1 comporte de préférence entre 5000 et 25000 orifices et les orifices 11 ont de préférence un diamètre compris entre 0,2 mm et 0,5 mm pour un diamètre d'assiette de 200 mm.

Le dispositif de formation de fibres minérales comprend également un premier inducteur annulaire 2 adapté à chauffer la partie supérieure de la paroi annulaire 10 du centrifugeur 1. Le premier inducteur annulaire 2 peut également être adapté à chauffer en outre le voile 13 du centrifugeur 1. Le premier inducteur annulaire 2 est par exemple disposé au-dessus du centrifugeur 1, à proximité du voile 13 et de la paroi annulaire 10. Le premier inducteur annulaire 2 est par exemple constitué de bobines comprenant entre une et quatre spires en cuivre, par exemple entre deux et quatre spires en cuivre. L'inducteur annulaire 2 est de préférence muni de concentrateurs de champs, par exemple en ferrite, qui permettent de diriger le champ magnétique vers l'assiette afin de ne chauffer que l'assiette et, ainsi, de protéger les autres pièces métalliques du dispositif. L'inducteur annulaire 2 permet de chauffer la paroi annulaire à une température comprise entre 1000 et 1200°C.

Le dispositif de formation de fibres minérales comprend également un deuxième inducteur annulaire 5, adapté à chauffer la partie basse de la paroi annulaire 10 du centrifugeur 1. Le deuxième inducteur annulaire peut également être adapté à chauffer en outre la zone du centrifugeur située en-dessous de la paroi annulaire 10. Le deuxième inducteur annulaire 5 est par exemple situé sous le centrifugeur. Le deuxième inducteur annulaire 5 est par exemple constitué de bobines comprenant entre une et quatre spires en cuivre, par exemple entre deux et quatre spires en cuivre. L'inducteur annulaire 5 est de préférence muni de concentrateurs de champs, par exemple en ferrite, qui permettent de diriger le champ magnétique vers l'assiette afin de ne chauffer que l'assiette et, ainsi, de protéger les autres pièces métalliques du dispositif. L'ensemble des deux inducteurs annulaires 2 et 5 a par exemple une puissance de 20 à 150 kW, par exemple de 20 à 70 kW.

La fréquence de fonctionnement des premier et deuxième inducteurs annulaires 2, 5 est par exemple entre 1 et 300 kH.

Le deuxième inducteur annulaire 5 est par exemple connecté avec le premier inducteur annulaire 2, en série ou en parallèle, de façon à ce que les champs magnétiques des premier et deuxième inducteurs annulaires 2, 5 soient en phase pour éviter les effets de mutuelle ou les champs déphasés qui s'annuleraient l'un l'autre.

En variante, les premier et deuxième inducteurs annulaires 2, 5 sont alimentés par deux circuits indépendants, de préférence alimentés indépendamment afin de pouvoir contrôler et réguler leur puissance indépendamment. Les générateurs dont de telle sorte que les effets de mutualité doivent être évités ou, au moins, limités.

Le chauffage de la bande annulaire par deux zones différentes (supérieure et inférieure) permet d'avoir un gradient de température sur la hauteur du centrifugeur 1. Cela permet de contrôler la viscosité du verre sur la hauteur de la bande annulaire et, ainsi, de fabriquer des fibres minérales ayant des dimensions et des propriétés plus homogènes. Lorsque les premier et deuxième inducteurs annulaires 2, 5 sont en série ou en parallèle, la différence de température de chauffe entre la zone supérieure et la zone inférieure de la bande annulaire est réglée en jouant par exemple sur la position, le nombre et le diamètre des spires de chaque inducteur annulaire. Lorsque les premier et deuxième inducteurs annulaires 2, 5 sont alimentés indépendamment, le réglage de la température sur les deux zones de la bande annulaire est facilité car la puissance peut être réglée indépendamment pour chaque inducteur annulaire.

La partie supérieure de la bande annulaire chauffée par le premier inducteur annulaire 2 et la partie inférieure de la bande annulaire chauffée par le deuxième inducteur annulaire 5 peuvent avoir une zone de recouvrement partielle. La zone de recouvrement ne peut pas être totale, sinon la possibilité d'avoir un gradient de température disparaîtrait.

Le dispositif de formation de fibres minérales comprend également une couronne de soufflage 4, disposée au-dessus du centrifugeur 1, et adaptée à souffler de l'air sur les fibres sortant du centrifugeur, de préférence verticalement et vers le bas, de façon à les rabattre vers un tapis de réception situé sous le dispositif de fibrage. La couronne de soufflage 4 peut souffler de l'air avec un angle d'au plus 25° par rapport à la verticale, en direction de la paroi annulaire 10. La pression du flux de soufflage à la sortie de la couronne de soufflage 4 est de préférence comprise entre 1 et 2 bars.

Le dispositif de formation de fibres minérales peut également comprendre une deuxième couronne de soufflage 3, disposée au-dessus du centrifugeur 1, à proximité du voile 13. La deuxième couronne de soufflage 3 est adaptée à souffler de l'air en direction du voile 13, de préférence verticalement et vers le bas. La pression du flux de soufflage à la sortie de la couronne de soufflage 3 est de préférence comprise entre 0,5 et 2 bars.

Lorsque la deuxième couronne de soufflage 3 est présente, les jets d'air soufflés par les deux couronnes de soufflage 3, 4 se rencontrent et créent, à leur intersection, une zone de turbulences. Cette zone de turbulences est située à proximité de la paroi annulaire 10. Les turbulences produites permettent d'étirer encore plus les fibres minérales qu'avec seulement la force centrifuge.

En variante, la couronne de soufflage 4 peut comprendre plusieurs sorties d'air concentriques mais plus ou moins éloignées de l'axe 9. Ou bien, le dispositif de formation de fibres minérales peut comprendre plusieurs premières couronnes de soufflage 4 disposées les unes au-dessus des autres, avec un diamètre légèrement différent les unes par rapport aux autres. Ces variantes permettent d'avoir plusieurs jets d'air concentriques qui créent une zone de turbulences favorable à un étirage des fibres amélioré.

Ces différentes variantes peuvent être combinées les unes aux autres.

De façon optionnelle, le dispositif de formation de fibres minérales peut également comprendre un brûleur interne (non représenté). Le brûleur interne permet de chauffer le centrifugeur 1 au démarrage du procédé de formation de fibres minérales de façon à ce que le verre fondu arrive dans un centrifugeur 1 qui ne soit pas froid pour éviter la cristallisation du verre. Le brûleur interne n'est de préférence utilisé qu'au démarrage de façon à éviter une production importante de dioxyde de carbone. Le débit de gaz du brûleur interne est inférieur à 5, par exemple inférieur à 3 Nm³/h.

De préférence, le centrifugeur 1 est chauffé uniquement par les deux inducteurs annulaires 2, 5 sans utiliser de brûleur interne. Ainsi, le taux de dixoyde de carbone émis par le dispositif de formation de fibres minérales peut être nul.

De plus, le dispositif de formation de fibres minérales a un rendement qui peut atteindre 75% ou plus, au lieu de seulement 30 % avec un brûleur à combustion interne, et cela pour des températures de fonctionnement comparables. Le dispositif de formation de fibres minérales selon l'invention permet ainsi un gain énergétique.

Le dispositif de formation de fibres minérales comprend également, de préférence, une couronne d'encollage des fibres minérales (non représentée), située sous le centrifugeur.

Selon une variante non représentée, le dispositif de formation de fibres minérales comprend un centrifugeur ouvert sur le dessus, sans voile ni tulipe, avec uniquement une paroi annulaire fermée en bas par un fond. Le fond est fixé à l'extrémité inférieure d'un arbre plein. Le centrifugeur est entraîné en rotation autour de son axe de symétrie par la rotation de l'arbre creux autour de l'axe de symétrie de l'arbre creux. Le verre fondu est amené dans l'assiette par un tuyau déporté par rapport à l'axe de symétrie du centrifugeur. Le tuyau d'amenée du verre fondu ne tourne pas avec l'arbre creux et le centrifugeur. L'inducteur annulaire 2 est disposé au-dessus de la paroi annulaire 10, de façon à chauffer au moins la partie supérieure de la paroi annulaire 10. Le dispositif comprend une seule couronne de soufflage 4, disposée au-dessus du centrifugeur 1, de façon à souffler de l'air sur les fibres sortant du centrifugeur, de préférence verticalement, de façon à les rabattre vers un tapis de réception situé sous le dispositif de fibrage. Le reste est identique au mode de réalisation décrit selon la figure 1.

L'invention concerne également un procédé de formation de fibres minérales par centrifugation interne. Ce procédé met en œuvre le dispositif selon l'invention, où le matériau à fibrer est déversé dans le centrifugeur 1. L'utilisation du centrifugeur selon l'invention permet ainsi d'améliorer le rendement énergétique du procédé et de diminuer, voire d'annuler, la production de dioxyde de carbone.

Les fibres minérales obtenues par le dispositif de formation de fibres minérales selon l'invention sont utilisées pour fabriquer des produits d'isolation thermique et/ou acoustique.

## Revendications

1. Dispositif de formation de fibres minérales comprenant :
- un centrifugeur (1) adapté à tourner autour d'un axe de rotation (9), le centrifugeur (1) comprenant une paroi annulaire (10) percée d'une pluralité d'orifices (11), la paroi annulaire (10) ayant pour axe de symétrie l'axe de rotation (9),
- un premier inducteur annulaire (2), adapté à chauffer la partie supérieure de la paroi annulaire (10),
- un deuxième inducteur annulaire (5), adapté à chauffer la partie inférieure de la paroi annulaire (10),
le chauffage de la bande annulaire par sa partie supérieure et par sa partie inférieure permettant un gradient de température sur la hauteur du centrifugeur (1).

2. Dispositif selon la revendication 1, où le premier inducteur annulaire (2) est disposé au-dessus du centrifugeur (1).

3. Dispositif selon l'une des revendications 1 ou 2 dans lequel la partie supérieure de la bande annulaire chauffée par le premier inducteur annulaire (2) et la partie inférieure de la bande annulaire chauffée par le deuxième inducteur annulaire (5) ont une zone de recouvrement partielle.

4. Dispositif selon l'une des revendications 1 à 3, comprenant en outre une première couronne de soufflage (4) adaptée à souffler de l'air sur les fibres minérales destinées à sortir de la pluralité d'orifices (11) de la paroi annulaire (10) de façon à les entraîner vers un tapis de réception et de convoyage des fibres.

5. Dispositif selon la revendication 4, comprenant en outre une deuxième couronne de soufflage (3) adaptée à souffler de l'air sur une zone du centrifugeur située au-dessus de la paroi annulaire (10), la coopération des première et deuxième couronnes de soufflage (3, 4) créant une zone de turbulences à proximité de la paroi annulaire (10) du centrifugeur (1), cette zone de turbulences permettant un étirage supplémentaire des fibres minérales destinées à sortir de la pluralité d'orifices (11) de la paroi annulaire (10).

6. Dispositif selon la revendication 4, comprenant en outre au moins deux premières couronnes de soufflage (4) concentriques de diamètres différents, la coopération des premières couronnes de soufflage créant une zone de turbulences à proximité de la paroi annulaire (10) du centrifugeur (1), cette zone de turbulences permettant un étirage supplémentaire des fibres minérales destinées à sortir de la pluralité d'orifices (11) de la paroi annulaire (10).

7. Dispositif selon l'une des revendications 4 à 6, dans lequel la première couronne annulaire (4) comporte plusieurs sorties d'air concentriques créant une zone de turbulences à proximité de la paroi annulaire (10) du centrifugeur (1), cette zone de turbulences permettant un étirage supplémentaire des fibres minérales destinées à sortir de la pluralité d'orifices (11) de la paroi annulaire (10).

8. Dispositif selon l'une des revendications 1 à 7, dans lequel les premier et deuxième inducteurs annulaires (2, 5) sont connectés en série ou en parallèle ou sont alimentés indépendamment l'un de l'autre.

9. Dispositif selon l'une des revendications 1 à 8, comprenant en outre un brûleur interne adapté à être utilisé au démarrage du dispositif de formation de fibres minérales.

10. Dispositif selon l'une des revendications 1 à 9, dans lequel le centrifugeur (1) comprend un fond.

11. Dispositif selon l'une des revendications 1 à 10, dans lequel le centrifugeur (1) ne comprend pas de fond et comprend un panier.

12. Dispositif selon l'une des revendications 1 à 11, comprenant en outre une couronne d'encollage des fibres minérales située sous le centrifugeur (1).

13. Procédé de formation de fibres minérales par centrifugation interne, mettant en œuvre le dispositif selon l'une des revendications 1 à 12, dans lequel le matériau à fibrer est déversé dans le centrifugeur (1), et la bande annulaire est chauffée par sa partie supérieure et par sa partie inférieure avec un gradient de température sur la hauteur dudit centrifugeur (1).

## Patentansprüche

1. Vorrichtung zur Bildung von Mineralfasern, umfassend:
- eine Zentrifuge (1), die sich um eine Drehachse (9) drehen kann, wobei die Zentrifuge (1) eine ringförmige Wand (10) aufweist, die von einer Vielzahl von Öffnungen (11) durchbohrt ist, wobei die Symmetrieachse der ringförmigen Wand (10) die Drehachse (9) ist,
- einen ersten ringförmigen Induktor (2), der geeignet ist, den oberen Teil der ringförmigen Wand (10) zu erwärmen,
- einen zweiten ringförmigen Induktor (5), der zur Erwärmung des unteren Teils der ringförmigen Wand (10) geeignet ist,
wobei die Beheizung der ringförmigen Wand durch ihren oberen Teil und durch ihren unteren Teil einen Temperaturgradienten über die Höhe der Zentrifuge ermöglicht.

2. Vorrichtung nach Anspruch 1, bei der der erste ringförmige Induktor (2) oberhalb der Zentrifuge (1) angeordnet ist.

3. Vorrichtung nach Anspruch 1 oder 2, bei der der obere Teil der durch den ersten Ringinduktor (2) beheizten Ringwand und der untere Teil der durch den zweiten Ringinduktor (5) beheizten Ringwand einen Bereich mit teilweiser Überlappung aufweisen.

4. Vorrichtung nach einem der Ansprüche 1 bis 3, die auch einen ersten Blasring (4) umfasst, der geeignet ist, Luft auf die Mineralfasern zu blasen, die im Begriff sind, durch die Vielzahl von Öffnungen (11) in der ringförmigen Wand (10) auszutreten, um sie zu einer Faseraufnahme- und -fördermatte zu treiben.

5. Vorrichtung nach Anspruch 4, die auch einen zweiten Blasring (3) umfasst, der geeignet ist, Luft auf einen Bereich der Zentrifuge zu blasen, der sich oberhalb der ringförmigen Wand (10) befindet, wobei das Zusammenwirken des ersten und des zweiten Blasrings (3, 4) einen Bereich von Turbulenzen in der Nähe der ringförmigen Wand (10) der Zentrifuge (1) erzeugt, wobei dieser Bereich von Turbulenzen ein zusätzliches Ziehen der Mineralfasern ermöglicht, die im Begriff sind, durch die Vielzahl von Öffnungen (11) in der ringförmigen Wand (10) zu treten.

6. Vorrichtung nach Anspruch 4, die auch mindestens zwei erste konzentrische Blasringe (4) mit unterschiedlichen Durchmessern umfasst, wobei das Zusammenwirken der ersten Blasringe einen Bereich von Turbulenzen in der Nähe der Ringwand (10) der Zentrifuge (1) erzeugt, wobei dieser Bereich von Turbulenzen ein zusätzliches Ziehen der Mineralfasern ermöglicht, die dabei sind, durch die Vielzahl von Öffnungen (11) in der Ringwand (10) auszutreten.

7. Vorrichtung nach einem der Ansprüche 4 bis 6, bei der der erste Ring (4) eine Vielzahl von konzentrischen Luftauslässen aufweist, die in der Nähe der Ringwand (10) der Zentrifuge (1) einen Bereich von Turbulenzen erzeugen, wobei dieser Bereich von Turbulenzen ein zusätzliches Mitreißen der Mineralfasern ermöglicht, die im Begriff sind, durch die Vielzahl von Öffnungen (11) in der Ringwand (10) auszutreten.

8. Vorrichtung nach einem der Ansprüche 1 bis 5, bei der der erste und der zweite ringförmige Induktor (2, 5) in Reihe oder parallel geschaltet sind oder unabhängig voneinander gespeist werden.

9. Vorrichtung nach einem der Ansprüche 1 bis 8, die auch einen internen Brenner umfasst, der zum Starten der Mineralfaserbildungsvorrichtung verwendet werden kann.

10. Vorrichtung nach einem der Ansprüche 1 bis 9, bei der die Zentrifuge (1) einen Boden aufweist.

11. Vorrichtung nach einem der Ansprüche 1 bis 10, bei der die Zentrifuge (1) keinen Boden und einen Korb aufweist.

12. Vorrichtung nach einem der Ansprüche 1 bis 11, die auch einen unter der Zentrifuge (1) angeordneten Mineralfaserklebering umfasst.

13. Verfahren zur Bildung von Mineralfasern durch Innenzentrifugieren, wobei die Vorrichtung nach einem der Ansprüche 1 bis 12 verwendet wird, bei dem das zu Fasern zu verarbeitende Material in die Zentrifuge (1) geschüttet wird.

## Claims

1. A mineral fiber forming device comprising:
- a centrifuge (1) suitable for rotating about a rotation axis (9), the centrifuge (1) comprising an annular wall (10) pierced by a plurality of orifices (11), the axis of symmetry of the annular wall (10) being the rotation axis (9),
- a first annular inductor (2) suitable for heating the top part of the annular wall (10),
- a second annular inductor (5) suitable for heating the bottom part of the annular wall (10),
the heating of the annular wall by its top part and by its bottom part enabling a temperature gradient over the height of the centrifuge.

2. The device as claimed in claim 1, in which the first annular inductor (2) is located above the centrifuge (1) .

3. The device as claimed in claims 1 or 2, in which the top part of the annular wall heated by the first annular inductor (2) and the bottom part of the annular wall heated by the second annular inductor (5) have an area of partial overlap.

4. The device as claimed in one of claims 1 to 3, also comprising a first blowing ring (4) suitable for blowing air on the mineral fibers that are about to leave through the plurality of orifices (11) in the annular wall (10) so as to drive them to a fiber receiving and conveying mat.

5. The device as claimed in claim 4, also comprising a second blowing ring (3) suitable for blowing air on an area of the centrifuge situated above the annular wall (10), the cooperation of the first and second blowing rings (3, 4) creating an area of turbulences in proximity to the annular wall (10) of the centrifuge (1), this area of turbulences allowing for an additional drawing of the mineral fibers that are about to leave through the plurality of orifices (11) in the annular wall (10).

6. The device as claimed in claim 4, also comprising at least two first concentric blowing rings (4) of different diameters, the cooperation of the first blowing rings creating an area of turbulences in proximity to the annular wall (10) of the centrifuge (1), this area of turbulences allowing for an additional drawing of the mineral fibers that are about to leave through the plurality of orifices (11) in the annular wall (10).

7. The device as claimed in one of claims 4 to 6, in which the first annular ring (4) comprises a plurality of concentric air outlets creating an area of turbulences in proximity to the annular wall (10) of the centrifuge (1), this area of turbulences allowing for an additional drawing of the mineral fibers that are about to leave through the plurality of orifices (11) in the annular wall (10).

8. The device as claimed in one of claims 1 to 5, in which the first and second annular inductors (2, 5) are connected in series or in parallel or are powered independently of one another.

9. The device as claimed in one of claims 1 to 8, also comprising an internal burner suitable for use on starting up the mineral fiber forming device.

10. The device as claimed in one of claims 1 to 9, in which the centrifuge (1) comprises a bottom.

11. The device as claimed in one of claims 1 to 10, in which the centrifuge (1) does not comprise a bottom and comprises a basket.

12. The device as claimed in one of claims 1 to 11, also comprising a mineral fiber gluing ring situated under the centrifuge (1).

13. A method for forming mineral fibers by internal centrifuging, implementing the device as claimed in one of claims 1 to 12, in which the material to be turned into fiber is poured into the centrifuge (1).
